# FASCICULE DE BREVET EUROPEEN

(11) **EP 3 015 714 B1**
(45) Date de publication et mention de la délivrance du brevet: **23.05.2018**
(21) Numéro de dépôt: 15190496.8
(22) Date de dépôt: 20.10.2015
(51) Int. Cl.: F04D 19/02, F01D 5/03, F02C 3/067, F04D 29/059, F01D 1/26, F01D 25/16

(54) **COMPRESSEUR DE TURBOMACHINE AXIALE AVEC DOUBLE ROTORS CONTRAROTATIFS**
KOMPRESSOR EINER AXIALEN TURBOMASCHINE MIT GEGENLÄUFIGEN DOPPELROTOREN
AXIAL TURBINE-ENGINE COMPRESSOR WITH DUAL COUNTER-ROTATING ROTORS

(30) Priorité: 27.10.2014 BE 201400791
(43) Date de publication de la demande: 04.05.2016
(73) Titulaire: Safran Aero Boosters SA, 4041 Herstal (BE)
(72) Inventeur: CRACCO, Cédric, 4100 SERAING (BE)
(74) Mandataire: Lecomte & Partners

(56) Documents cités:
- EP-A2- 1 340 903
- DE-A1- 1 428 220
- FR-A1- 2 217 545
- JP-A- H1 073 155
- US-A- 4 159 624
- US-A- 4 790 133

## Description

### Domaine technique

Le domaine de la présente invention est celui des turbomachines, et en particulier des turboréacteurs double flux pour l'aéronautique. Plus précisément l'invention aborde le sujet les compresseurs de turbomachines axiales dont le rotor est formé de deux portions aubagées contrarotatives.

### Technique antérieure

L'emploi de rotors contrarotatifs pour un compresseur permet d'en augmenter le taux de compression pour une longueur imposée et pour un nombre de rangées d'aube prédéterminé. Cette solution permet ainsi de raccourcir à la fois le compresseur et la turbomachine dans laquelle se trouve le compresseur ; un allégement substantiel est par la même réalisé.

Le document US20140286749 A1 divulgue une turbomachine axiale avec un compresseur formé de deux rotors contrarotatifs. Chaque rotor supporte plusieurs rangées d'aubes, les aubes du rotor interne et les aubes du rotor externe forment une alternance. Le rotor interne entraîne le rotor externe par l'intermédiaire d'un pignon dont l'axe de rotation est orienté radialement. L'entraînement entre les rotors s'effectue par l'intermédiaire de différents arbres perpendiculaires dotés de pignons. Une transmission débrayable est ajoutée sur l'un des arbres. Cette architecture permet de moduler la compression en découplant les rotors. Toutefois, cette solution est complexe en raison du nombre de constituants. Le coût de fabrication et l'entretien nécessitent des ressources importantes. Par ailleurs, le taux de compression reste réduit.

Le document FR 2 217 454 A1 et le document DE 1 428 220 A1 divulguent chacun un turboréacteur double flux avec un compresseur comportant des rotors contrarotatifs. L'un des rotors comporte une jonction radiale disposée axialement au niveau d'un palier tournant lié à l'autre des deux rotors.

Le document JP H10 73155 A divulgue une turbomachine avec deux rotors contrarotatifs, lesquels supportent respectivement un palier tournant et une jonction radiale au niveau du palier tournant. En outre, une transmission de mouvement fait tourner ces rotors dans des sens inverses.

### Résumé de l'invention

### Problème technique

L'invention a pour objectif de résoudre au moins un des problèmes posés par l'art antérieur. Plus précisément, l'invention a pour objectif d'augmenter la pression en sortie du compresseur. L'invention a également pour objectif d'augmenter le taux de compression du compresseur tout en réduisant l'énergie nécessaire pour entraîner le compresseur à un débit prédéfini.

### Solution technique

L'invention a pour objet un compresseur de turbomachine axiale selon la revendication 1.

Selon un mode avantageux de l'invention, la jonction radiale comprend une interface interne de fixation d'arbre de transmission, le palier tournant étant disposé au droit axialement de ladite interface interne.

Selon un mode avantageux de l'invention, chaque palier tournant est disposé axialement au droit d'une même rangée d'aubes du rotor interne.

Selon un mode avantageux de l'invention, la jonction radiale présente un profil de révolution autour de l'axe de rotation du compresseur, ledit profil s'étendant principalement radialement, préférentiellement essentiellement radialement, vers l'intérieur du rotor interne; et/ou la liaison radiale comprend un disque au droit duquel est disposé axialement le palier tournant.

Selon un mode avantageux de l'invention, le palier tournant est disposé à l'extérieur du rotor externe, préférentiellement le rotor externe comprend une moitié amont et une moitié aval, le palier tournant est disposé au niveau de la moitié amont du rotor externe.

Selon un mode avantageux de l'invention, le compresseur comprend essentiellement un palier tournant ou essentiellement deux paliers tournants placés au droit d'une même rangée d'aubes.

Selon un mode avantageux de l'invention, au moins un ou chaque rotor comprend au moins un renfort annulaire interne disposé à l'intérieur du rotor correspondant, préférentiellement chaque rotor comprend un renfort annulaire interne disposé à l'intérieur du rotor au droit de chacune de ses rangées d'aubes.

Selon un mode avantageux de l'invention, le compresseur comprend une transmission de mouvement entre les rotors configurée pour qu'ils tournent en sens inverses, préférentiellement à une même vitesse angulaire.

Selon un mode avantageux de l'invention, la transmission comprend au moins un pignon, préférentiellement une rangée annulaire de pignons, chaque pignon présentant un axe de rotation orienté radialement, préférentiellement perpendiculairement à l'axe de rotation du compresseur.

Selon un mode avantageux de l'invention, la transmission comprend deux couronnes dentées chacune formée sur l'un des rotors, les dents de chaque couronne s'étendant axialement vers l'autre couronne.

Selon un mode avantageux de l'invention, la transmission est placée au niveau de la moitié axiale du rotor externe opposée à la moitié axiale du rotor externe où est placé chaque palier tournant monté sur le rotor externe.

Selon un mode avantageux de l'invention, le rotor externe comprend une paroi circulaire externe reliant toutes ses rangées d'aubes, une virole interne disposée à l'intérieur de la paroi externe, le rotor externe comprend une rangée d'aubes formant une extrémité axiale du compresseur reliant la virole interne à la paroi externe.

Selon un mode avantageux de l'invention, les extrémités externes des aubes du rotor interne sont des extrémités libres et/ou la majorité des extrémités externes des aubes du rotor externe sont des extrémités libres.

Selon un mode avantageux de l'invention, le rotor externe comprend un tronçon axial s'étendant sur moins d'une moitié, préférentiellement moins d'un tiers, plus préférentiellement moins d'un quart de sa longueur axiale sur lequel est disposé chaque palier le reliant au stator du compresseur.

Selon un mode avantageux de l'invention, au moins un ou chaque renfort annulaire interne présente une portion annulaire externe de moindre épaisseur.

Selon un mode avantageux de l'invention, la jonction annulaire radiale prolonge radialement vers l'intérieur un renfort annulaire interne.

Selon un mode avantageux de l'invention, les rangées d'aubes du rotor interne et du rotor externe sont configurées pour pouvoir comprimer progressivement un flux annulaire lorsque les rotors tournent dans des sens de rotation inverses.

Selon un mode avantageux de l'invention, le compresseur peut être un compresseur axial. Un compresseur axial peut être entendu comme un compresseur qui comprime axialement un flux lorsque ce dernier se déplace axialement vers l'aval.

Selon un mode avantageux de l'invention, les dents des couronnes sont formées sur les renforts annulaires internes des rotors.

Selon un mode avantageux de l'invention, la paroi externe du rotor externe présente une diminution de diamètre vers l'aval.

Selon un mode avantageux de l'invention, la majorité axiale du rotor interne est disposée à l'intérieur du rotor externe.

Selon un mode avantageux de l'invention, chaque rotor comprend au moins trois rangées d'aubes.

Selon un mode avantageux de l'invention, chaque rotor forme un tambour grâce à une rangée d'aubes et/ou la jonction annulaire radiale.

Selon un mode avantageux de l'invention, les aubes des rotors forment des rangées d'aubes contrarotatives.

Selon un mode avantageux de l'invention, la portée amont et/ou la portée aval entoure le rotor interne, préférentiellement au moins une rangée d'aube du rotor interne.

Selon un mode avantageux de l'invention, le rotor externe comprend un tronçon s'étendant sur au moins un tiers, préférentiellement au moins une moitié de sa longueur axiale qui est libre de palier coopérant avec le stator du compresseur ou de la turbomachine, éventuellement le rotor externe comprend deux tronçons s'étendant sur au moins un tiers de sa longueur axiale qui est libre de palier coopérant avec le stator du compresseur ou de la turbomachine.

L'invention a également pour objet une turbomachine comprenant un compresseur, remarquable en ce que le compresseur est conforme à l'invention, éventuellement le compresseur est un compresseur basse pression, et/ou la turbomachine comprenant un arbre de transmission, notamment un arbre interne de transmission, auquel est reliée la jonction radiale.

Selon un mode avantageux de l'invention, la turbomachine comprend un carter intermédiaire, le compresseur étant monté en amont du carter intermédiaire, éventuellement le carter intermédiaire comprend un corps intermédiaire et une portée annulaire s'étendant axialement vers l'amont depuis le corps intermédiaire, le palier tournant étant monté à l'intérieur de la portée annulaire amont.

Selon un mode avantageux de l'invention, la turbomachine comprend un carter amont, le compresseur étant monté en aval du carter amont, éventuellement le carter amont comprend un corps amont et une portée annulaire s'étendant axialement vers l'aval depuis le corps amont, le palier tournant étant monté à l'intérieur de la portée annulaire aval.

Selon un mode avantageux de l'invention, la turbomachine comprend un arbre externe de transmission et un arbre interne de transmission disposé à l'intérieur de et/ou traversant l'arbre externe.

### Avantages apportés

L'invention améliore le rendement de la turbomachine en augmentant le taux de compression du compresseur. Ce résultat est atteint en maîtrisant les jeux lors de différentes phases de fonctionnement du booster. La contrainte de la force centrifuge est transformée en un avantage puisque les zones présentant des augmentations de diamètres identiques ou similaires au régime nominal sont alignées. L'action de la dilation est également prise en compte pour déterminer le jeu de sécurité nécessaire à la fois à bas régime au sol, lors de la phase d'accélération du régime moteur, et lors du fonctionnement en vol de croisière en altitude.

La configuration du compresseur est particulièrement bien adaptée pour résister au pompage. En effet, la présence de faces de contact axiales sur les couronnes de la transmission, et de pignons répartis circulairement, favorise l'appui entre les rotors et les carters. Le palier tournant est également délesté.

### Brève description des dessins

La figure 1 représente une turbomachine axiale selon l'invention.
La figure 2 esquisse un compresseur de turbomachine selon l'invention.
La figure 3 illustre une coupe du compresseur suivant l'axe 3-3 tracé sur la figure 2 selon l'invention.
La figure 4 illustre une coupe d'une portion de la transmission selon l'invention.

### Description des modes de réalisation

Dans la description qui va suivre, les termes intérieur ou interne et extérieur ou externe renvoient à un positionnement par rapport à l'axe de rotation d'une turbomachine axiale.

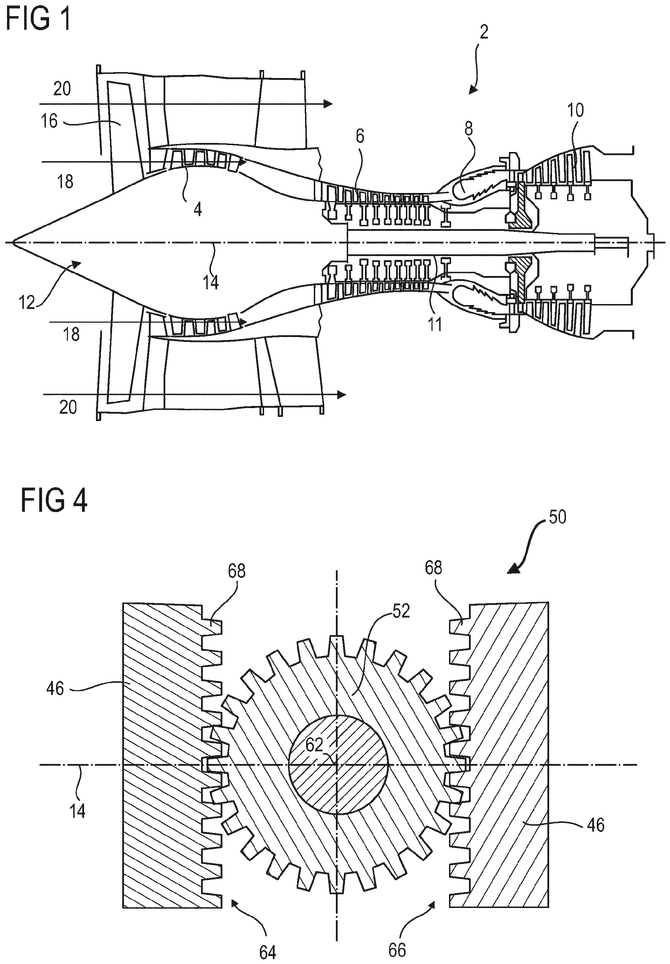

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via un arbre de transmission 11 jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine.

Les flux primaire 18 et secondaire 20 sont des flux annulaires, ils sont canalisés par les carters du stator de la turbomachine. Ces carters peuvent en outre permettre de relier la soufflante, les compresseurs et les turbines. D'amont en aval, la turbomachine peut présenter un carter amont entre la soufflante 16 et le compresseur basse pression 4, ainsi qu'un carter intermédiaire entre les compresseurs 4 et 6.

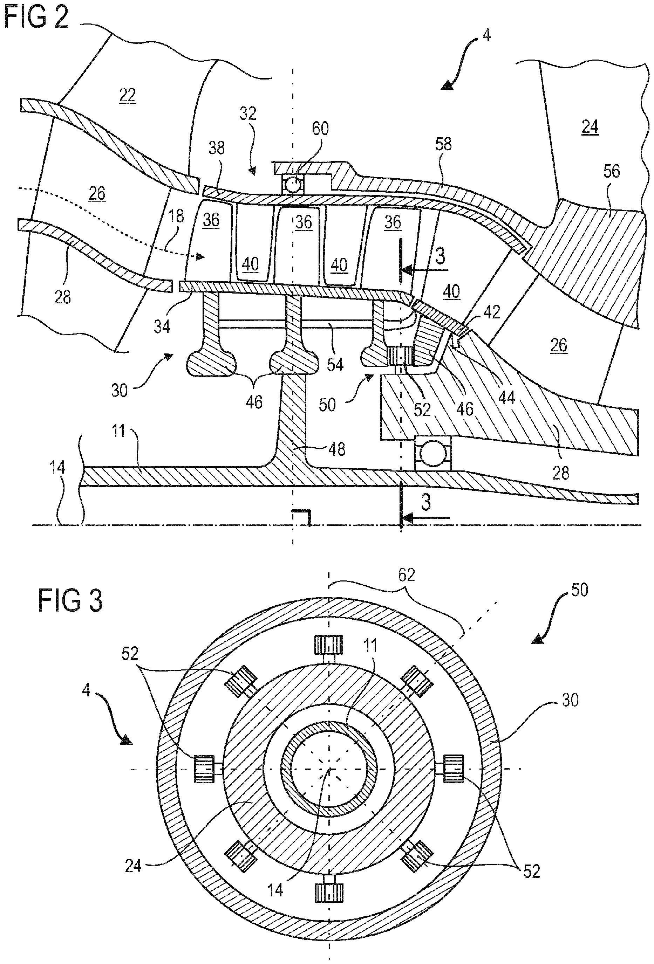

La figure 2 est une vue en coupe d'un compresseur 4 d'une turbomachine axiale telle que celle de la figure 1. Le compresseur peut être un compresseur basse-pression 4. On peut y observer une partie du carter amont 22 et une partie du carter intermédiaire 24. Chaque carter peut présenter une rangée annulaire de bras de carter 26 pour relier leurs moyeux internes 28 aux portions externes respectives. Les bras de carter 26 traversent radialement le flux primaire 18.

Le compresseur 4 comprend un rotor formé de deux portions contrarotatives, à savoir un rotor interne 30 et un rotor externe 32, qui tournent dans des sens inverses. Les rotors (30 ; 32) sont coaxiaux et engagés l'un dans l'autre. Le rotor interne 30 est majoritairement ou totalement logé dans le rotor externe 32, le rotor externe 32 entoure le rotor interne 30.

Chaque rotor (30 ; 32) comprend une paroi circulaire et plusieurs rangées d'aubes rotoriques, éventuellement trois chacun. Le rotor interne 30 comprend une paroi interne 34 d'où s'étendent radialement les aubes internes 36 vers l'extérieur tandis que le rotor externe 32 comprend une paroi externe 38 d'où s'étendent radialement vers l'intérieur les aubes externes 40. La paroi externe 38 est plus longue axialement que la paroi interne 34, elles définissent entre elles une veine, avantageusement étanche, guidant et délimitant le flux primaire 18 au cours de sa compression. Elles présentent des diamètres se réduisant vers l'aval, tout comme le diamètre moyen de la veine pour favoriser la compression du flux primaire 18.

Les parois (34 ; 38) peuvent généralement présenter des épaisseurs constantes. Elles peuvent présenter des formes tronconiques, ou des formes d'ogives. Elles peuvent présenter des profils de révolution autour de l'axe de rotation 14, qui présentent des portions coudées. La paroi externe 38 peut inclure une portion axiale dont le profil est davantage incliné par rapport à l'axe de rotation 14 que le reste du profil. Les parois (34 ; 38) peuvent être formées de plusieurs tronçons aubagés fixés ou soudés axialement les uns aux autres. Des brides radiales (non représentées) peuvent être prévues aux interfaces entre les tronçons axiaux.

Le rotor externe 32 comprend une rangée amont d'aubes 40 formant l'extrémité amont du compresseur 4, et une virole interne 42 reliée aux extrémités internes des aubes externes 40 amont. Ces dernières permettent d'entraîner la paroi externe 38. La virole 42 peut être pourvue d'étanchéité, par exemple de couches de matériaux abradable coopérant avec une ou plusieurs léchettes 44 formées sur le carter intermédiaire 24 ou sur le rotor interne 30. Ces étanchéités évitent les recirculations sous la virole 42 qui pénalisent le taux de compression.

Chaque rotor (30 ; 32) peut comprendre au moins un renfort annulaire 46 ou « poireau ». Le rotor interne 30 présente plusieurs renforts annulaires 46, par exemple un disposé au niveau de chaque rangée d'aubes rotoriques (36 ; 40). Il peut en comprendre trois, dont un central axialement. Le rotor externe 32 peut présenter un renfort annulaire 46 à l'intérieur de sa virole interne 42, éventuellement placée dans le prolongement radial des aubes 40 de la rangée associée.

Le rotor interne 30 comprend une jonction annulaire radiale 48 permettant de le relier à l'arbre de transmission 11 provenant d'une turbine, elle s'étend radialement dans le sens opposé des aubes du rotor interne 30. Elle permet une fixation. L'arbre et la jonction sont solidaires. La jonction radiale 48 peut être un disque, essentiellement plat. Alternativement, elle peut présenter un profil de révolution incliné par rapport à la direction radiale, et former un entonoir. La jonction radiale 48 peut être liée à un renfort annulaire 46, par exemple le renfort central de sorte à limiter les déformations radiales de la paroi interne 34 qui sont liées à la force centrifuge. La jonction peut présenter une interface de fixation à l'arbre. Ladite interface peut être tubulaire. Elle peut être soudée à l'arbre.

Les rangées d'aubes internes 36 et externes 40 sont toutes disposées axialement par alternance ; préférentiellement régulièrement. Par exemple à chaque rangée interne 36 succède une rangée externe 40, ou inversement. Les aubes (36 ; 40) des rotors (30 ; 32) présentent des cordes inclinées par rapport à l'axe de rotation 14, les aubes internes 46 sont inclinées dans un sens, tandis que les aubes externes 40 sont inclinées dans l'autre sens. Une corde est une ligne reliant un bord d'attaque à un bord de fuite d'un profil d'une aube (36 ; 40), l'empilement radial des profils formant l'aube. Ainsi, les rotors (30 ; 32) sont contrarotatifs ; ils parviennent à comprimer le flux primaire 18 lorsqu'ils tournent dans des sens inverses. Le flux annulaire 18 est comprimé progressivement de l'amont vers l'aval du compresseur 4. L'inclinaison des cordes des aubes de chaque rangée d'aube peut augmenter régulièrement d'une rangée à l'autre, d'amont vers l'aval.

Afin d'assurer la rotation des rotors (30 ; 32) dans des sens inverses, le compresseur 4 comprend une transmission 50, éventuellement configurée de sorte à ce que les rotors (30 ; 32) tournent à des mêmes nombres de tours par minute lorsqu'ils s'entraînent mutuellement. La transmission 50 communique des rotations d'un rotor à l'autre. Elle comprend au moins un élément tournant 52 dont l'axe de rotation est orienté radialement, une couronne formée à l'intérieur de chaque rotor (30 ; 32). Suivant une alternative de l'invention, la transmission est disposée à l'extérieur radialement des rotors. Les couronnes peuvent être formées sur des renforts 46 des rotors (30 ; 32), sur des faces en regard et au même niveau radialement desdits renforts. Le rotor interne 30 peut en outre présenter des renforts tubulaires 54 entre les renforts annulaires 46 pour répartir des efforts axiaux issus de la transmission 50.

Au moins un carter (22 ; 24), par exemple le carter intermédiaire 24 présente un corps 56 et une portée annulaire 58 s'étendant axialement depuis le corps 56. Le profil de révolution autour de l'axe de rotation 14 de la portée annulaire 58 s'étend principalement axialement, la portée peut être tubulaire. Alternativement, la portée annulaire est formée sur le carter amont, et/ou dans le corps d'un carter. La portée annulaire 58 peut épouser la surface annulaire externe de la paroi externe 38. Le compresseur 4 comprend au moins un palier tournant 60 articulant en rotation le rotor externe 32 par rapport au carter intermédiaire 24. Le rotor externe 32 peut présenter un épaississement au niveau du palier tournant 60 pour le renforcer. Selon l'invention, le palier tournant 60 est disposé au droit axialement de la jonction radiale 48 du rotor interne 30, ce qui permet de superposer les points d'appuis, ou cercles de support des rotors.

Ainsi, les zones de rotors (30 ; 32) peu déformées par la force centrifuge sont alignées, tandis que les zones plus déformées se chevauchent. Les zones plus déformées sont celles qui sont libres de paliers, de liaisons. Puisque les rotors (30 ; 32) peuvent tourner à des mêmes vitesses de rotation, les forces centrifuges sont similaires tout le long de l'axe de rotation 14 pour chaque rotor (30 ; 32). En particulier, les deux parois supportant les aubes sont soumises à des forces centrifuges similaires tout le long de l'axe de rotation. Ainsi, les espaces entre les aubes (36 ; 40) et les parois opposées (34 ; 38) restent généralement constants au repos et en fonctionnement. Cette particularité favorise la conception de rotors contrarotatifs dont les jeux entre les extrémités libres des aubes et les surfaces des parois radialement en regard sont minimes, ce qui a pour effet d'augmenter le taux de compression tant à bas régime qu'à haut régime. L'avantage est d'augmenter le rendement de la turbomachine pour différents modes de fonctionnement. Le gain s'accentue pour un compresseur dit « haute vitesse », c'est-à-dire dont la vitesse de rotation est supérieure à 5 000 tr/min, et qui peut atteindre 16 000 tr/min.

La figure 3 représente une coupe du compresseur 4 suivant l'axe 3-3 tracé sur la figure 2. L'arbre de transmission 11, le carter intermédiaire 24, la paroi interne 34 sont concentriques. Un autre arbre de transmission concentrique peut relier indépendamment la soufflante à une turbine.

La transmission 50 est annulaire, elle permet de reprendre une partie des efforts axiaux et/ou radiaux qui s'appliquent sur le rotor externe. De la sorte, les efforts s'exerçant sur le palier tournant sont limités, et un seul roulement, ou deux roulements disposés sur une même moitié axiale du rotor externe peuvent suffire. Eventuellement, ces moyens tournant peuvent être disposés à une extrémité axiale du rotor externe, par exemple au niveau d'une rangée d'aubes. Un roulement à billes et/ou un roulement à rouleaux peuvent être employés, ils peuvent être en butée l'un contre l'autre.

La transmission 50 peut comprendre au moins un, ou plusieurs pignons 52 répartis angulairement autour de l'axe de rotation 14. Elle peut comprendre au moins trois, au moins six, éventuellement au moins huit pignons 52. Leurs axes de rotation 62 peuvent être régulièrement inclinés angulairement.

La figure 4 représente une coupe d'une portion de la transmission 50. La coupe est effectuée parallèlement à l'axe de rotation 14 de la turbomachine. Un pignon 52 et deux couronnes dentées (64 ; 66) sont représentés.

La transmission comprend un pignon 52 avec un axe de rotation 62 agencé dans le prolongement, perpendiculairement à l'axe de rotation 14. Ceci conduit à limiter les efforts de frottement dans la transmission 50, et donc réchauffement dans la turbomachine. Les couronnes dentées (64 ; 66) des rotors interne et externe se font face ; elles sont parallèles. Leurs dents 68 s'étendent en direction de la couronne (64 ; 66) disposée axialement en regard. Les couronnes dentées (64 ; 66) forment des crémaillères circulaires avec des dentures formées sur des faces axiales ou sensiblement coniques. La hauteur et la profondeur des dentures 68 des crémaillères sont agencées axialement.

Les pignons 52 peuvent être tronconiques de sorte à se conformer à la configuration de la transmission 50, c'est-à-dire entre deux couronnes axiales sensiblement coniques. Des pignons sont ici représentés, toutefois des galets lisses pourraient être employés en remplacement. Les couronnes présentent alors des surfaces de roulement et d'entraînement lisses.

## Revendications

1. Compresseur (4 ; 6) de turbomachine axiale (2) comprenant :
- un rotor interne (30) muni de plusieurs rangées annulaires d'aubes (36) et d'une jonction annulaire radiale interne (48) destinée à relier le rotor interne (30) à un arbre de transmission (11) de la turbomachine (2); et
- un rotor externe (32) entourant le rotor interne (30) et comportant plusieurs rangées annulaires d'aubes (40) ; les rangées d'aubes du rotor interne et du rotor externe sont disposées par alternance afin de comprimer un flux annulaire (18 ; 20) lorsque les rotors (30 ; 32) tournent en sens inverses ;
- un stator ;
au moins un palier tournant (60) lié au rotor externe (32) et disposé au droit axialement de la jonction radiale (48) du rotor interne (30) de sorte à aligner axialement les zones de maintien des rotors ;
le palier tournant (60) formant une liaison tournante entre le rotor externe (32) et le stator du compresseur (4 ; 6) ;
**caractérisé en ce que**
le rotor interne (30) comporte une paroi circulaire interne (34) reliant toutes ses rangées d'aubes (36), la jonction annulaire radiale (48) et le palier tournant (60) étant disposés au niveau axialement du milieu de la paroi circulaire interne (34).

2. Compresseur (4 ; 6) selon la revendication 1, **caractérisé en ce que** la jonction radiale (48) comprend une interface interne de fixation d'arbre de transmission (11), le palier tournant (60) étant disposé au droit axialement de ladite interface interne.

3. Compresseur (4 ; 6) selon l'une des revendications 1 à 2, **caractérisé en ce que** chaque palier tournant (60) est disposé axialement au droit d'une même rangée d'aubes (36) du rotor interne (30).

4. Compresseur (4 ; 6) selon l'une des revendications 1 à 3, **caractérisé en ce que** la jonction radiale (48) présente un profil de révolution autour de l'axe de rotation du compresseur (14), ledit profil s'étendant principalement radialement, préférentiellement essentiellement radialement, vers l'intérieur du rotor interne (30); et/ou la liaison radiale (48) comprend un disque au droit duquel est disposé axialement le palier tournant.

5. Compresseur (4 ; 6) selon l'une des revendications 1 à 4, **caractérisé en ce que** le palier tournant (60) est disposé à l'extérieur du rotor externe (32), préférentiellement le rotor externe (32) comprend une moitié amont et une moitié aval, le palier tournant (60) est disposé au niveau de la moitié amont du rotor externe (32).

6. Compresseur (4 ; 6) selon l'une des revendications 1 à 5, **caractérisé en ce qu'**au moins un ou chaque rotor (30 ; 32) comprend au moins un renfort annulaire interne (46) disposé à l'intérieur du rotor (30 ; 32) correspondant, préférentiellement chaque rotor comprend un renfort annulaire interne disposé à l'intérieur du rotor au droit de chacune de ses rangées d'aubes.

7. Compresseur (4 ; 6) selon l'une des revendications 1 à 6, **caractérisé en ce qu'**il comprend une transmission de mouvement (50) entre les rotors (30 ; 32) configurée pour qu'ils tournent en sens inverses, préférentiellement à une même vitesse angulaire.

8. Compresseur (4; 6) selon la revendication 7, **caractérisé en ce que** la transmission (50) comprend au moins un pignon (52), préférentiellement une rangée annulaire de pignons (52), chaque pignon (52) présentant un axe de rotation (62) orienté radialement, préférentiellement perpendiculairement à l'axe de rotation (14) du compresseur.

9. Compresseur (4 ; 6) selon l'une des revendications 7 à 8, **caractérisé en ce que** la transmission (50) comprend deux couronnes dentées (64 ; 66) chacune formée sur l'un des rotors (30 ; 32), les dents (68) de chaque couronne s'étendant axialement vers l'autre couronne (64 ; 66).

10. Compresseur (4 ; 6) selon l'une des revendications 7 à 9, **caractérisé en ce que** la transmission (50) est placée au niveau de la moitié axiale du rotor externe (32) opposée à la moitié axiale du rotor externe (32) où est placé chaque palier tournant (60) monté sur le rotor externe (32).

11. Compresseur (4 ; 6) selon l'une des revendications 1 à 10, **caractérisé en ce que** le rotor externe (32) comprend une paroi circulaire externe (38) reliant toutes ses rangées d'aubes (40), une virole interne (42) disposée à l'intérieur de la paroi externe (38), le rotor externe (32) comprend une rangée d'aubes (40) formant une extrémité axiale du compresseur (4; 6) reliant la virole interne (42) à la paroi externe (38).

12. Turbomachine (2) comprenant un compresseur (4 ; 6), **caractérisée en ce que** le compresseur (4; 6) est conforme à l'une des revendications 1 à 11, éventuellement le compresseur étant un compresseur basse pression (4), et la turbomachine (2) comprenant un arbre de transmission (11), notamment un arbre interne de transmission, auquel est reliée la jonction radiale (48).

13. Turbomachine (2) selon la revendication 12, **caractérisée en ce qu'**elle comprend un carter intermédiaire (24), le compresseur (4 ; 6) étant monté en amont du carter intermédiaire (24), éventuellement le carter intermédiaire (24) comprenant un corps intermédiaire (56) et une portée annulaire (58) s'étendant axialement vers l'amont depuis le corps intermédiaire (56), le palier tournant (60) étant monté à l'intérieur de la portée annulaire (58) amont.

14. Turbomachine (2) selon l'une des revendications 12 à 13, **caractérisée en ce qu'**elle comprend un carter amont (22), le compresseur (4 ; 6) étant monté en aval du carter amont (22), éventuellement le carter amont (22) comprenant un corps amont et une portée annulaire s'étendant axialement vers l'aval depuis le corps amont, le palier tournant (60) étant monté à l'intérieur de la portée annulaire aval.

## Patentansprüche

1. Kompressor (4; 6) einer axialen Turbomaschine, umfassend:
- einen inneren Rotor (30), der mit mehreren ringförmigen Schaufelreihen (36) und einer inneren radialen ringförmigen Verbindung (48), die dafür bestimmt ist, den inneren Rotor (30) mit einer Getriebewelle (11) der Turbomaschine (2) zu verbinden, versehen ist, und
- einen äußeren Rotor (32), der den inneren Rotor (30) umgibt und mehrere ringförmige Schaufelreihen (40) umfasst; wobei die Schaufelreihen des inneren und des äußeren Rotors alternierend angeordnet sind, um einen ringförmigen Strom (18; 20) zu verdichten, wenn sich die Rotoren (30; 32) in entgegengesetzten Richtungen drehen;
- einen Stator;
- mindestens ein Drehlager (60), das mit dem äußeren Rotor (32) in Verbindung steht und axial in Höhe mit der radialen Verbindung (48) des inneren Rotors (30) angeordnet ist, um die Rotortragzonen axial auszurichten;
wobei das Drehlager (60) eine Drehverbindung zwischen dem äußeren Rotor (32) und dem Stator des Kompressors (4; 6) bildet; **dadurch gekennzeichnet, dass**
der innere Rotor (30) eine innere kreisförmige Wand (34) umfasst, die all ihre Schaufelreihen (36) verbindet, wobei die radiale ringförmige Verbindung (48) und das Drehlager (60) axial auf einer Höhe mit der Mitte der inneren kreisförmigen Wand (34) angeordnet sind.

2. Kompressor (4; 6) nach Anspruch 1, **dadurch gekennzeichnet, dass** die radiale Verbindung (48) eine innere Schnittstelle zur Befestigung an der Getriebewelle (11) umfasst, wobei das Drehlager axial auf einer Höhe mit der inneren Schnittstelle angeordnet ist.

3. Kompressor (4; 6) nach einem der Ansprüche 1 bis 2, **dadurch gekennzeichnet, dass** jedes Drehlager (60) axial auf einer Höhe mit einer gleichen Schaufelreihe (36) des inneren Rotors (30) angeordnet ist.

4. Kompressor (4; 6) nach einem der Ansprüche 1 bis 3, **dadurch gekennzeichnet, dass** die radiale Verbindung (48) ein Drehprofil um die Drehachse des Kompressors (14) aufweist, wobei dieses Profil sich prinzipiell radial, bevorzugt im Wesentlichen radial, zur Innenseite des inneren Rotors (30) hin erstreckt; und/oder die radiale Verbindung (48) eine Scheibe axial auf einer Höhe mit dem Drehlager (60) bildet.

5. Kompressor (4; 6) nach einem der Ansprüche 1 bis 4, **dadurch gekennzeichnet, dass** das Drehlager (60) außerhalb des äußeren Rotors (32) angeordnet ist, der äußere Rotor (32) bevorzugt eine stromaufwärtige Hälfte und eine stromabwärtige Hälfte umfasst, und das Drehlager (60) auf einer Höhe mit der stromabwärtigen Hälfte des äußeren Rotors (32) angeordnet ist.

6. Kompressor (4; 6) nach einem der Ansprüche 1 bis 5, **dadurch gekennzeichnet, dass** mindestens ein oder jeder Rotor (30; 32) mindestens eine innere ringförmige Verstärkung (46) umfasst, die im Inneren des entsprechenden Rotors (30; 32) angeordnet ist, und bevorzugt jeder Rotor eine innere ringförmige Verstärkung umfasst, die im Inneren des Rotors in Höhe jeder seiner Schaufelreihen angeordnet ist.

7. Kompressor (4; 6) nach einem der Ansprüche 1 bis 6, **dadurch gekennzeichnet, dass** er eine Bewegungsübertragungsvorrichtung (50) zwischen den Rotoren (30; 32) umfasst, die so ausgelegt ist, dass sie in entgegengesetzten Richtungen rotieren, bevorzugt mit derselben Winkelgeschwindigkeit.

8. Kompressor (4; 6) nach Anspruch 7, **dadurch gekennzeichnet, dass** die Übertragungsvorrichtung (50) mindestens ein Antriebszahnrad (52), bevorzugt eine ringförmige Reihe von Antriebszahnrädern (52), umfasst, wobei jedes Antriebszahnrad (52) eine radial, bevorzugt senkrecht, zur Drehachse (14) des Kompressors ausgerichtete Drehachse (62) aufweist.

9. Kompressor (4; 6) nach einem der Ansprüche 7 bis 8, **dadurch gekennzeichnet, dass** die Übertragungsvorrichtung (50) zwei Hohlräder (64; 66) umfasst, die jedes an einem der Rotoren (30; 32) gebildet sind, wobei sich die Zähne (68) jedes Hohlrades axial zu dem anderen Hohlrad (64; 66) hin erstrecken.

10. Kompressor (4; 6) nach einem der Ansprüche 7 bis 9, **dadurch gekennzeichnet, dass** die Übertragungsvorrichtung (50) in Höhe der axialen Hälfte des äußeren Rotors (32) gegenüber der axialen Hälfte des äußeren Rotors (32), worauf jedes an dem äußeren Rotor (32) montierte Drehlager (60) platziert ist angeordnet ist.

11. Kompressor (4; 6) nach einem der Ansprüche 1 bis 10, **dadurch gekennzeichnet, dass** der äußere Rotor (32) eine äußere kreisförmige Wand (38), die all seine Schaufelreihen (40) verbindet, und eine in der äußeren Wand (38) angeordnete innere Hülle (42) umfasst und der äußere Rotor (32) eine Schaufelreihe (40) umfasst, die ein axiales Ende des Kompressors (4; 6) bildet, das die innere Hülle (42) mit der äußeren Wand (38) verbindet.

12. Turbomaschine (2), umfassend einen Kompressor (4; 6), **dadurch gekennzeichnet, dass** der Kompressor (4; 6) einem der Ansprüche 1 bis 11 entspricht, wobei der Kompressor bevorzugt ein Niederdruckkompressor (4) ist, und die Turbomaschine eine Getriebewelle umfasst, insbesondere eine innere Getriebewelle, mit der die radiale Verbindung (48) verbunden ist.

13. Turbomaschine (2) nach Anspruch 12, **dadurch gekennzeichnet, dass** sie ein Zwischengehäuse (24) umfasst, wobei der Kompressor (4; 6) stromaufwärts von dem Zwischengehäuse (24) montiert ist, das Zwischengehäuse (24) bevorzugt einen Zwischenkörper (56) und einen ringförmigen Stützkörper (58), die sich axial stromaufwärts von dem Zwischenkörper (56) erstrecken, umfasst, wobei das Drehlager (60) im Inneren des stromaufwärtigen ringförmigen Stützkörpers (58) montiert ist.

14. Turbomaschine (2) nach einem der Ansprüche 12 bis 13, **dadurch gekennzeichnet, dass** es ein stromaufwärtiges Gehäuse (22) umfasst, wobei der Kompressor (4; 6) stromabwärts von dem stromaufwärtigen Gehäuse (22) montiert ist, wobei das stromaufwärtige Gehäuse (22) bevorzugt einen stromaufwärtigen Körper und einen ringförmigen Stützkörper, der sich axial stromabwärts von dem stromaufwärtigen Körper erstreckt, umfasst, wobei das Drehlager (60) im Inneren des stromabwärtigen ringförmigen Stützkörpers montiert ist.

## Claims

1. Compressor (4; 6) of an axial turbine engine (2), comprising:
- an inner rotor (30) provided with several annular blade rows (36) and an inner radial annular junction (48) intended to connect the inner rotor (30) to a transmission shaft (11) of the turbine engine (2), and
- an outer rotor (32) surrounding the inner rotor (30) and comprising several annular blade rows (40); the blade rows of the inner and outer rotors being arranged alternately in order to compress an annular flow (18; 20) when the rotors (30; 32) turn in opposite directions;
- a stator;
- at least one rotating bearing (60) linked to the outer rotor (32) and arranged axially level with the radial junction (48) of the inner rotor (30) so as to align the rotor support zones axially;
the rotating bearing (60) forming a rotating link between the outer rotor (32) and the stator of the compressor (4; 6);
**characterized in that**
the inner rotor (30) comprises an inner circular wall (34) linking all its blade rows (36), the radial annular junction (48) and the rotating bearing (60) being arranged axially level with the middle of the inner circular wall (34).

2. Compressor (4; 6) according to claim 1, **characterized in that** the radial junction (48) comprises an inner interface for fixation to the transmission shaft (11), the rotating bearing being arranged axially level with said inner interface.

3. Compressor (4; 6) according to one of claims 1 to 2, **characterized in that** each rotating bearing (60) is arranged axially level with a same row of blades (36) of the inner rotor (30).

4. Compressor (4; 6) according to any of claims 1 to 3, **characterized in that** the radial junction (48) has a revolution profile about the rotation axis of the compressor (14), said profile extending principally radially, preferably substantially radially, towards the inside of the inner rotor (30); and/or the radial link (48) forms a disc axially level with the rotating bearing (60).

5. Compressor (4; 6) according to any of claims 1 to 4, **characterized in that** the rotating bearing (60) is arranged outside the outer rotor (32), preferably the outer rotor (32) comprises an upstream half and a downstream half, the rotating bearing (60) is arranged level with the upstream half of the outer rotor (32).

6. Compressor (4; 6) according to any of claims 1 to 5, **characterized in that** at least one or each rotor (30; 32) comprises at least one inner annular reinforcement (46) arranged inside the corresponding rotor (30; 32), preferably each rotor comprises an inner annular reinforcement arranged inside the rotor at the level of each of its blade rows.

7. Compressor (4; 6) according to any of claims 1 to 6, **characterized in that** it comprises a transmission of movement (50) between the rotors (30; 32), configured such that they rotate in opposite directions, preferably at the same angular speed.

8. Compressor (4; 6) according to claim 7, **characterized in that** the transmission (50) comprises at least one pinion (52), preferably an annular row of pinions (52), each pinion (52) having a rotation axis (62) oriented radially, preferably perpendicularly to the rotation axis (14) of the compressor.

9. Compressor (4; 6) according to one of claims 7 to 8, **characterized in that** the transmission (50) comprises two ring gears (64; 66) each formed on one of the rotors (30; 32), the teeth (68) of each ring gear extending axially towards the other ring gear (64; 66).

10. Compressor (4; 6) according to any of claims 7 to 9, **characterized in that** the transmission (50) is placed at the level of the axial half of the outer rotor (32) opposite the axial half of the outer rotor (32) on which each rotating bearing (60) mounted on the outer rotor (32) is placed.

11. Compressor (4; 6) according to any of claims 1 to 10, **characterized in that** the outer rotor (32) comprises an outer circular wall (38) linking all its blade rows (40), an inner shroud (42) arranged inside the outer wall (38), the outer rotor (32) comprises a blade row (40) forming an axial end of the compressor (4; 6) linking the inner shroud (42) to the outer wall (38).

12. Turbine engine (2) comprising a compressor (4;6), **characterized in that** the compressor (4; 6) is according to any one of claims 1 to 11, the compressor preferably being a low-pressure compressor (4), and the turbine engine comprises a transmission shaft, notably an internal transmission shaft, to which the radial junction (48) is linked.

13. Turbine engine (2) according to claim 12, **characterized in that** it comprises an intermediate housing (24), the compressor (4; 6) being mounted upstream of the intermediate housing (24), preferably the intermediate housing (24) comprises an intermediate body (56) and an annular supporting body (58) extending axially upstream from the intermediate body (56), the rotating bearing (60) being mounted inside the upstream annular supporting body (58).

14. Turbine engine (2) according to one of claims 12 to 13, **characterized in that** it comprises an upstream housing (22), the compressor (4; 6) being mounted downstream of the upstream housing (22), wherein the upstream housing (22) preferably comprises an upstream body and an annular supporting body extending axially downstream from the upstream body, the rotating bearing (60) being mounted inside the downstream annular supporting body.
